(19) Europäisches Patentamt
European Patent Office
Office européen des brevets

(11) **EP 4 262 339 B1**

(12) **EUROPEAN PATENT SPECIFICATION**

(45) Date of publication and mention
of the grant of the patent:
**01.10.2025 Bulletin 2025/40**

(51) International Patent Classification (IPC):
*A01B 69/00* (2006.01) *A01D 41/12* (2006.01)
*A01D 43/073* (2006.01)

(21) Application number: **21762125.9**

(52) Cooperative Patent Classification (CPC):
**A01B 69/001; A01D 41/1208; A01D 41/1217;
A01D 43/073**

(22) Date of filing: **19.08.2021**

(86) International application number:
**PCT/IB2021/057645**

(87) International publication number:
**WO 2022/130039 (23.06.2022 Gazette 2022/25)**

(54) **SYSTEM AND METHOD OF ASSISTED OR AUTOMATED GRAIN UNLOAD SYNCHRONIZATION**

SYSTEM UND VERFAHREN ZUR UNTERSTÜTZTEN ODER AUTOMATISIERTEN
KORNENTLADUNGSSYNCHRONISIERUNG

SYSTÈME ET PROCÉDÉ DE SYNCHRONISATION ASSISTÉE OU AUTOMATISÉE DE
DÉCHARGEMENT DE GRAIN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2020 GB 202020174**

(43) Date of publication of application:
**25.10.2023 Bulletin 2023/43**

(73) Proprietor: **AGCO International GmbH
8212 Neuhausen am Rheinfall (CH)**

(72) Inventors:
• **CHRISTIANSEN, Martin
8930 Randers (DK)**
• **BUCHACA TARRAGONA, Ramon
8930 Randers (DK)**

(74) Representative: **AGCO Intellectual Property
Department
AGCO Limited
Abbey Park Stoneleigh
Kenilworth CV8 2TQ (GB)**

(56) References cited:
EP-B1- 0 760 202      DE-T5- 112014 000 274
US-A1- 2014 290 199      US-A1- 2014 325 422
US-A1- 2020 128 740      US-B2- 10 129 528
US-B2- 9 392 746

## Description

### FIELD

Embodiments of the present invention relate to systems and methods for assisted or automatic synchronization of agricultural machine operations. More particularly, embodiments of the present invention relate to systems and methods for assisted or automatic synchronization of machine movement during transfer of crop material from one machine to another.

### BACKGROUND

Combine harvesters are used in agricultural production to cut or pick up crops such as wheat, corn, beans and milo from a field and process the crop to remove grain from stalks, leaves and other material other than grain (MOG). Processing the crop involves gathering the crop into a crop processor, threshing the crop to loosen the grain from the MOG, separating the grain from the MOG and cleaning the grain. The combine harvester stores the clean grain in a clean grain tank and discharges the MOG from the harvester onto the field. The cleaned grain remains in the clean grain tank until it is transferred out of the tank through an unload conveyor into a receiving vehicle, such as a grain truck or a grain wagon pulled by a tractor.

To avoid frequent stops during a harvesting operation it is common to unload the grain from a harvester while the combine harvester is in motion harvesting crop. Unloading the harvester while it is in motion requires a receiving vehicle to drive alongside the combine harvester during the unload operation. This requires the operator driving the receiving vehicle to align a grain bin of the receiving vehicle with the spout of an unload conveyor of the combine for the duration of the unload operation. Aligning the two vehicles in this manner is laborious for the operator of the receiving vehicle and, in some situations, can be particularly challenging. Some circumstances may limit the operator's visibility, for example, such as where there is excessive dust in the air or at nighttime. Furthermore, if the receiving vehicle has a large or elongated grain bin, such as a large

## SYSTEM AND METHOD OF ASSISTED OR AUTOMATED GRAIN UNLOAD SYNCHRONIZATION

### FIELD

Embodiments of the present invention relate to systems and methods for assisted or automatic synchronization of agricultural machine operations. More particularly, embodiments of the present invention relate to systems and methods for assisted or automatic synchronization of machine movement during transfer of crop material from one machine to another.

### BACKGROUND

Combine harvesters are used in agricultural production to cut or pick up crops such as wheat, corn, beans and milo from a field and process the crop to remove grain from stalks, leaves and other material other than grain (MOG). Processing the crop involves gathering the crop into a crop processor, threshing the crop to loosen the grain from the MOG, separating the grain from the MOG and cleaning the grain. The combine harvester stores the clean grain in a clean grain tank and discharges the MOG from the harvester onto the field. The cleaned grain remains in the clean grain tank until it is transferred out of the tank through an unload conveyor into a receiving vehicle, such as a grain truck or a grain wagon pulled by a tractor.

US 9,392,746 B2 discloses a system for controlling the transfer of agricultural material from a transferring vehicle to a receiving vehicle. The edges of a container of the transferring vehicle can be identified by container module and an opening of the container can be defined. A spout module can identify the spout of the transferring vehicle. Additionally, an alignment module may control speed, velocity or heading of the transferring vehicle or of the receiving vehicle to achieve a target spatial offset. Further, US 9,392,746 B2 deals with the determination of a fill level profile of agricultural material within a storage portion. Thus, uneven loading and localized stresses on portions of the receiving vehicle may be prevented.

To avoid frequent stops during a harvesting operation it is common to unload the grain from a harvester while the combine harvester is in motion harvesting crop. Unloading the harvester while it is in motion requires a receiving vehicle to drive alongside the combine harvester during the unload operation. This requires the operator driving the receiving vehicle to align a grain bin of the receiving vehicle with the spout of an unload conveyor of the combine for the duration of the unload operation. Aligning the two vehicles in this manner is laborious for the operator of the receiving vehicle and, in some situations, can be particularly challenging. Some circumstances may limit the operator's visibility, for example, such as where there is excessive dust in the air or at nighttime. Furthermore, if the receiving vehicle has a large or elongated grain bin, such as a large grain cart or a grain truck, it is desirable to shift the position of the grain bin relative to the spout during the unload operation to evenly fill the grain bin and avoid spilling grain.

Forage harvesters also process crop but function differently from combine harvesters. Rather than separating grain from MOG, forage harvesters chop the entire plant-including grain and MaG-into small pieces for storage and feeding to livestock. Forage harvesters do not store the processed crop onboard the harvester during the harvest operation, but rather transfer the processed crop to a receiving vehicle by blowing the crop material through a discharge chute to the receiving vehicle, such as a silage wagon pulled by a tractor, without storing it on the harvester. Thus, a receiving vehicle must closely follow the forage harvester during the entire harvester operation. This presents similar challenges to those discussed above in relation to the combine harvester.

The above section provides background information related to the present disclosure which is not necessarily prior art.

## SUMMARY

The invention provides a system according to claim 1. Preferred embodiments are provided in the dependent claims.

## DRAWINGS

Embodiments of the present invention are described in detail below with reference to the attached drawing figures, wherein:

Fig. 1 is an agricultural harvester constructed in accordance with an embodiment of the invention.
Fig. 2 is a block diagram of an electronic system of the agricultural harvester of Fig. 1.
Fig. 3 illustrates the agricultural harvester of Fig. 1 and a receiving vehicle, with the agricultural harvester in position to transfer grain to the receiving vehicle.
Fig. 4 is a block diagram of certain components of a camera used on the harvester of Fig. 1.
Fig. 5 is a perspective view of the agricultural harvester and receiving vehicle of Fig. 3 illustrating a field of view of the camera of Fig. 4 when mounted on a side of the harvester of Fig. 1.
Fig. 6 is a block diagram illustrating software modules used by a computing device to identify the receiving vehicle and determine the receiving vehicle's location.
Fig. 7 illustrates an image captured by the camera and used by the computing device to identify the receiving vehicle and determine the receiving vehicle's location.
Fig. 8 illustrates the image of Fig. 7 including a bounding box generated by the computing device indicating the location of at least a portion of the receiving vehicle in the image.
Fig. 9 is a diagram illustrating an embodiment wherein the agricultural harvester shares data wirelessly with the receiving vehicle and another embodiment wherein the agricultural harvester shares data wirelessly with the receiving vehicle and a portable electronic device.
Fig. 10 illustrates a first graphical user interface including a graphical representation of the relative positions of the agricultural harvester and the receiving vehicle.
Fig. 11 illustrates a second graphical user interface including a graphical representation of the relative positions of the agricultural harvester and the receiving vehicle.
Fig. 12 is an agricultural harvester constructed in accordance with another embodiment of the invention.
Fig. 13 is a perspective view of the agricultural harvester of Fig. 12 and a receiving vehicle illustrating a scan area of an electromagnetic detecting and ranging module on the agricultural harvester.
Fig. 14 illustrates data points collected by the electromagnetic detecting and ranging module when placed over an empty receiving vehicle.
Fig. 15 illustrates data points collected by the electromagnetic detecting and ranging module when placed over a partially filled receiving vehicle.
Fig. 16 illustrates a graphical user interface including a graphical representation of the relative positions of the agricultural harvester and the receiving vehicle and a fill level and distribution of contents of the receiving vehicle.
Fig. 17 is another agricultural harvester constructed according to embodiments of the invention in the form of a forage harvester.
Fig. 18 illustrates the agricultural harvester of Fig. 17 harvesting crop and transferring a stream of processed crop into a receiving vehicle.

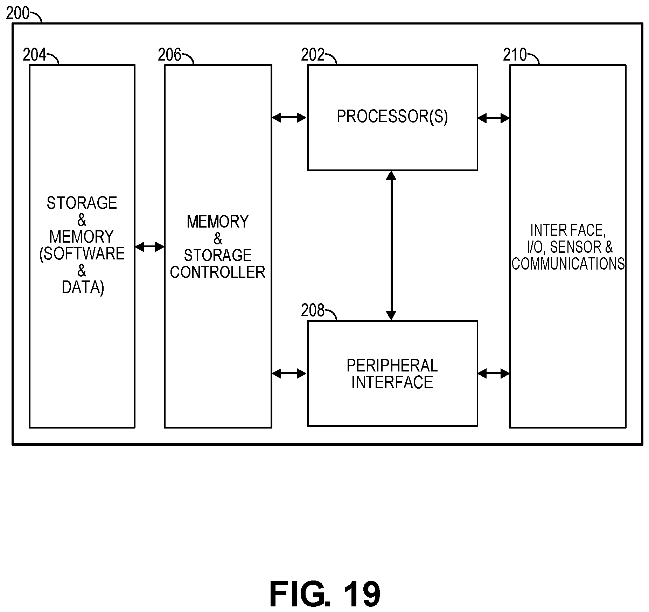

Fig. 19 is a block diagram of certain components of a portable electronic device.

The drawing figures do not limit the present invention to the specific embodiments disclosed and described herein. The drawings are not necessarily to scale, emphasis instead being placed upon clearly illustrating the principles of the invention.

## DESCRIPTION

The following detailed description of embodiments of the invention references the accompanying drawings. The embodiments are intended to describe aspects of the invention in sufficient detail to enable those skilled in the art to practice the invention. Other embodiments can be utilized and changes can be made without departing from the scope of the claims. The following description is, therefore, not to be taken in a limiting sense. Further, it will be appreciated that the claims are not necessarily limited to the particular embodiments set out in this description.

In this description, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments, but is not necessarily included. Thus, the present technology can include a variety of combinations and/or integrations of the embodiments described herein.

When elements or components are referred to herein as being "connected" or "coupled," the elements or components may be directly connected or coupled together or one or more intervening elements or components may also be present. In contrast, when elements or components are referred to as being "directly connected" or "directly coupled," there are no intervening elements or components present.

Given the challenges of synchronizing operation of harvesters and receiving vehicles during unload operations it is desirable to assist machine operators in manually controlling the machines or to fully automate movement of at least one of the harvester and the receiving vehicle to maintain the desired relative positions of the two vehicles. Assisting operation and fully automating movement of at least one of the machines in this way requires continuously generating position data, in real time or nearly in real time, indicating the relative positions of the machines. Generating and communicating position data presents various technical challenges that make it difficult to reliably acquire accurate position data. During harvest operations, for example, the machines operate in remote locations where data communications with external networks, such as cellular communications networks, are often limited or nonexistent; mountains, trees or other obstacles may limit the number of reliable GNSS satellite signals the machines can receive; harvesting environments are often dusty which can interfere with the operation of some types of sensors (such as optical sensors); harvesting operations may be performed at various times throughout the day (and even at nighttime) that present different and sometimes challenging ambient light situations that can limit the effectiveness of optical sensors; and harvesting operations may involve multiple harvesters and multiple receiving vehicles, wherein each harvester works with multiple receiving vehicles. Various embodiments of the present invention solve the problems associated with detecting the relative positions of the harvesters and receiving vehicles during unload operations and provide assisted or fully automated operation of at least one of the machines to synchronize movement during unload operations.

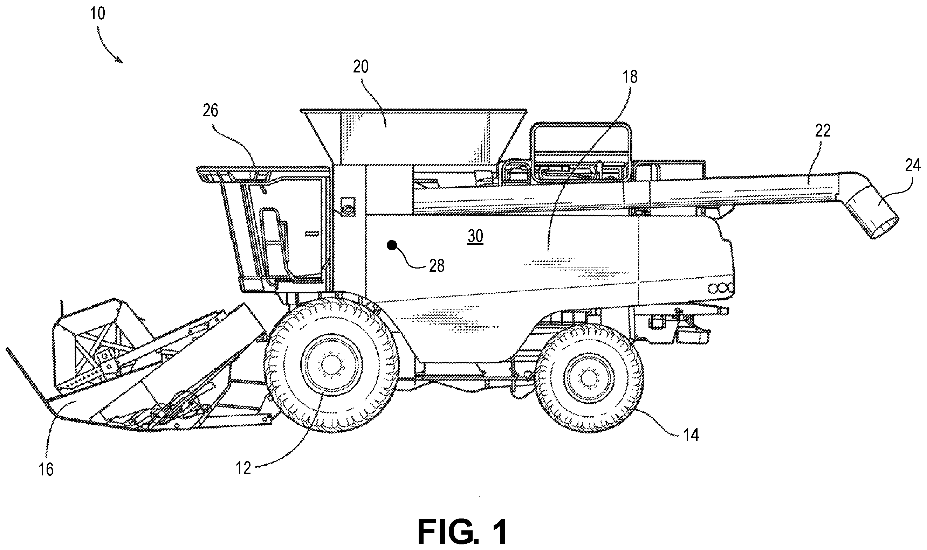

Turning now to the drawing figures, and initially Figs. 1-3, an agricultural harvester 10 constructed in accordance with the first embodiment is illustrated. The harvester 10 is a combine harvester that cuts or picks up crop from a field, threshes the crop to loosen the grain from material other than grain (MOG), separates the grain from the MOG, cleans the grain, stores the clean grain in a clean grain tank and transfers the clean grain out of the clean grain tank to a receiving vehicle or other receptacle. The illustrated harvester 10 includes a pair of front wheels 12 and a pair of rear wheels 14 that support the harvester 10 on a ground surface, propel it along the ground surface and provide steering. A header 16 cuts crop standing in a field (or picks up crop that was previous cut) as the harvester 10 moves through the field and gathers the cut crop to be fed to a processor housed within a body 18 of the harvester 10.

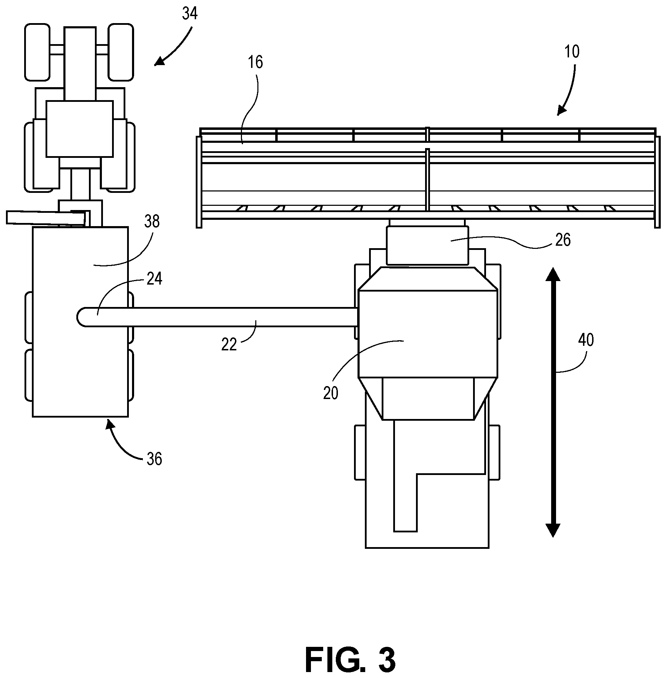

The processor threshes the grain, separates the grain from the MOG, cleans the grain and stores the clean grain in a clean grain tank 20. Thus, the processor reduces crop material (plants or portions of plants cut or picked up from the field) to processed crop (grain). An unload conveyor 22 transfers grain from the clean grain tank 20 to a receiving vehicle or other receptacle using one or more augers, belts or similar mechanisms to move grain out of the clean grain tank 20, through the unload conveyor 22 and out a spout 24 positioned at an end of the unload conveyor 22 distal the body 18 of the harvester 10. The unload conveyor 22 is illustrated in a stowed position in Fig. 1 used when the harvester 10 is not transferring grain out of the grain tank 20. The unload conveyor 22 is moveable between the stowed position and a deployed position, illustrated in Fig. 3, used to transfer grain from the grain tank 20 to a receiving vehicle or other receptacle. The receiving vehicle illustrated in Fig. 3 is a tractor 34 and grain cart 36 combination. The grain cart 36 includes a grain bin 38 for holding crop transferred out of the harvester 10. When the unload conveyor 22 is in the deployed position it is generally perpendicular to a longitudinal axis of the harvester 10, the longitudinal axis being parallel with line 40 in Fig. 3. When the unload conveyor 22 is in the fully stowed position (Fig. 1) it is generally parallel with the longitudinal axis of the harvester.

An operator cabin 26 includes a seat and a user interface for enabling an operator to control various aspects of the harvester 10. The user interface includes mechanical components, electronic components, or both such as, for example, knobs, switches, levers, buttons, dials as well as electronic displays and touchscreen displays that both present information to the operator in graphical form and receive information from the operator. The use interface is described further below as part of the electronic system 42 of the harvester 10. The harvester 10 includes a camera 28 also mounted on the exterior surface 30. In the embodiment illustrated in Fig. 1, the camera 28 is mounted on the exterior surface 30 (being on the same side of the harvester 10 as the unload conveyor 22), between one meter and four meters from the ground. In another embodiment of the invention, the camera 28 is mounted on the surface 30 between one and one-half meters and three meters from the ground. It will be appreciated that the precise location of the camera 28 is not critical and that the camera 28 may be place in other, equally-preferred locations.

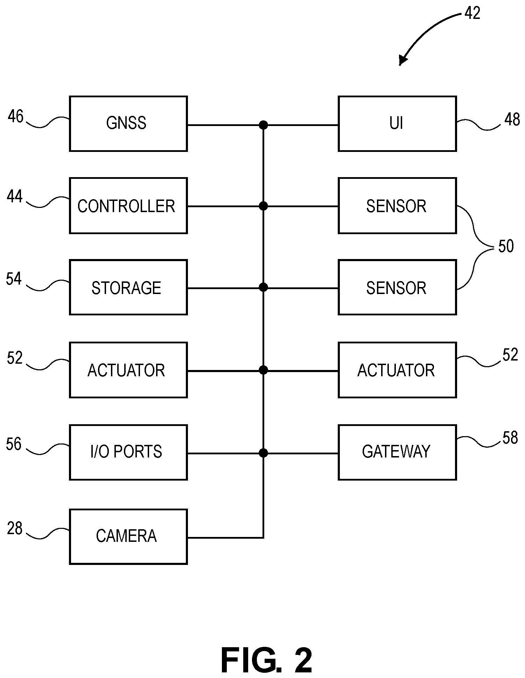

The harvester 10 includes an electronic system 42 illustrated in Fig. 2. The system 42 broadly includes a controller 44, a position determining device 46, a user interface 48, one or more sensors 50, one or more actuators 52, one or more storage components 54, one or more input/out ports 56, a communications gateway 58 and the camera 28.

The position determining device 46 includes a global navigation satellite system (GNSS) receiver, such as a device configured to receive signals from one or more positioning systems such as the United States' global positioning system (GPS), the European GALILEO system and/or the Russian GLONASS system, and to determine a location of the machine using the received signals. The user interface 48 includes components for receiving information, instructions or other input from a user and may include buttons, switches, dials, and microphones, as well as components for presenting information or data to users, such as displays, light-emitting diodes, audio speakers and so forth. The user interface 48 may include one or more touchscreen displays capable of presenting visual representations of information or data and receiving instructions or input from the user via a single display surface.

The sensors 50 may be associated with any of various components or functions of the harvester 10 including, for example, various elements of the engine, transmission(s), and hydraulic and electrical systems. One or more of the sensors 50 may be configured and placed to detect environmental or ambient conditions in, around or near the harvester 10. Such environmental or ambient conditions may include temperature, humidity, wind speed and wind direction. The actuators 52 are configured and placed to drive certain functions of the harvester 10 including, for example, moving the unload conveyor 22 between the stowed and deployed positions, driving an auger or belt associated with the unload conveyor 22 and steering the rear wheels 14. The actuators 52 may take virtually any form but are generally configured to receive control signals or instructions from the controller 44 (or other component of the system 42) and to generate a mechanical movement or action in response to the control signals or instructions. By way of example, the sensors 50 and actuators 52 may be used in automated steering of the harvester 10 wherein the sensors 50 detect a current position or state of the steered wheels 14 and the actuators 52 drive steering action of the wheels 14. In another example, the sensors 50 collect data relating to the operation of the harvester 10 and store the data in the storage component 54, communicate the data to a remote computing device via the communications gateway 58, or both.

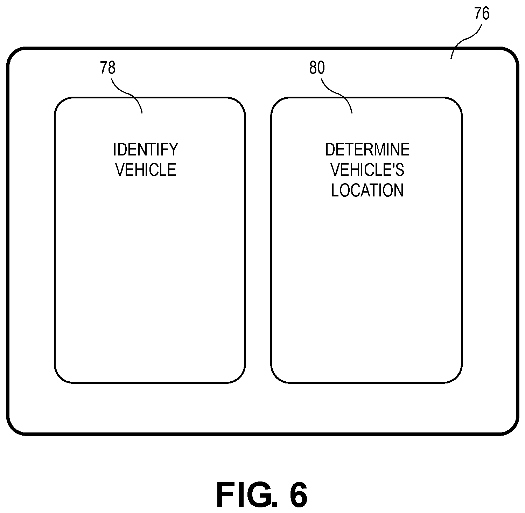

The controller 44 is a computing device and includes one or more integrated circuits programmed or configured to implement the functions described herein and associated with the harvester 10, including all or a portion of the software illustrated in Fig. 6 and described below. By way of example the controller 44 may be a digital controller and may include one or more general purpose microprocessors or microcontrollers, programmable logic devices, application specific integrated circuits or other computing devices. The controller 44 may include multiple computing components or devices, such as electronic control units, placed in various different locations on the harvester 10, and may include one or more computing devices connected to the system 42 through the I/O ports 56. The controller 44 may also include one or more discrete and/or analog circuit components operating in conjunction with the one or more integrated circuits or computing components. Furthermore, the controller 44 may include or have access to one or more memory elements operable to store executable instructions, data, or both. The storage component 54 stores data and preferably includes a non-volatile storage medium such as solid state, optic or magnetic technology.

The communications gateway 58 enables wireless communications with other machines such as other harvesters or tractors, with external devices such as laptop or tablet computers or smartphones, and with external communications networks such as a cellular telephone network or Wi-Fi network. The gateway 58 includes one or more wireless transceivers configured to communicate according to one or more wireless communications protocols or standards, such as one or more of protocols based on the IEEE 802.11 family of standards ("Wi-Fi"), the Bluetooth wireless communications standard, a 433MHz wireless communications protocol or a protocol for communicating over a cellular telephone network. Alternatively or additionally, the communications gateway 58 may include one or more wireless transceivers configured to communicate according to one or more proprietary or non-standardized wireless communication technologies or protocols, such as proprietary wireless communications protocols using 2.4GHz or 5GHz radio signals.

It will be appreciated that, for simplicity, certain elements and components of the system 42 have been omitted from the present discussion and from the diagram illustrated in Fig. 2. A power source or power connector is also associated with the system 42, for example, but is conventional in nature and, therefore, is not discussed herein.

In the illustrated embodiment all of the components of the system 42 are contained on or in the harvester 10. The present invention is not so limited, however, and in other embodiments one or more of the components of the system 42 may be external to the harvester 10. In some embodiments, for example, some of the components of the system 42 are contained on or in the harvester 10 while other components of the system are contained on or in an implement associated with the harvester 10. In those embodiments, the components associated with the harvester 10 and the components associated with the implement may communicate via wired or wireless communications according to a local area network such as, for example, a controller area network. The system may be part of a communications and control system conforming to the ISO 11783 (also referred to as "ISOBUS") standard. In some embodiments, one or more components of the system 42 may be located separately or remotely from the harvester 10 and any implements associated with the harvester 10. In those embodiments, the system 42 may include wireless communications components (e.g., the gateway 58) for enabling the harvester 10 to communicate with another machine or a remote computer, computer network or system. It may be desirable, for example, to use one or more computing devices external to the harvester 10 to determine, or assist in determining, the location of a receiving vehicle, a fill level of the receiving vehicle and/or the distribution of processed crop in the receiving vehicle, as explained below.

In the first embodiment the one or more computing devices has reference to the controller 44, including multiple devices that, taken together, may constitute the controller 44 as explained above. It will be appreciated, though, that in other embodiments the one or more computing devices may be separate from, but in communication with, the harvester 10. In those embodiments the one or more computing devices may include computing devices associated with a portable electronic device, such as a laptop computer, a tablet computer or a smartphone, may include computing devices embedded in another agricultural machine, such as a receiving vehicle, or both. Furthermore, in some embodiments the one or more computing devices may include computing devices from multiple machines or devices, such as a computing device on the harvester 10 and a computing device on or in a receiving vehicle. By way of example, a computing device on the harvester 10 may receive and process data from the camera 28 to generate location information and may communicate the location information to the tractor 34 via the communications gateway 58, wherein another computing device on the tractor 34 generates automated guidance data for guiding the tractor 34 or generates graphic data for presentation on a user interface in the tractor 34. In that scenario the one or more computing devices comprise both the computing device on the harvester 10 and the computing device on the tractor 34.

The tractor 34 also includes an electronic system similar to the system 42 of the harvester 10, except that the electronic system of the tractor 34 does not include the camera 28. The electronic system of the tractor 34 broadly includes a controller, a position determining device, a user interface, one or more sensors, one or more actuators, one or more storage components, one or more input/out ports a communications gateway similar or identical to those described above as part of the system 42.

The camera 28 is positioned and configured for capturing images of objects that are proximate the harvester 10. The camera 28 is located on the exterior side surface 30 of the body 18 of the harvester 10, as explained above, and has a field of view extending outwardly from the side surface 30 and with a center of the field of view being perpendicular or approximately perpendicular to the longitudinal axis of the harvester 10. This corresponds to an area in which a receiving vehicle is located during crop transfer operations.

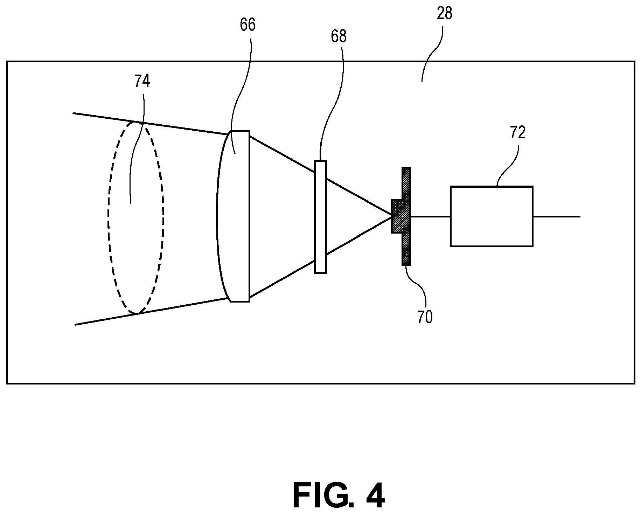

A diagram of certain components of the camera 32 is illustrated in Fig. 4 and includes one or more lenses 66, an optional filter 68, a detector 70, and processing circuitry 72. The one or more lenses collect and direct light from a field of view 74 through the filter 68 to the detector 70 and serve to focus and/or magnify images. The filter 68 passes select spectral bands such as ultraviolet, infrared or other bands. In some embodiments the camera 28 does not have a filter 68. The detector 70 is a digital image sensor that converts electromagnetic energy to an electric signal and employs image sensing technology such as charge-coupled device (CCD) technology and/or complementary metal oxide semiconductor (CMOS) technology. The processing circuitry 72 includes circuitry for amplifying and processing the electric signal generated by the detector 70 to generated image data, which his passed to the one or more computing devices such as the controller 44.

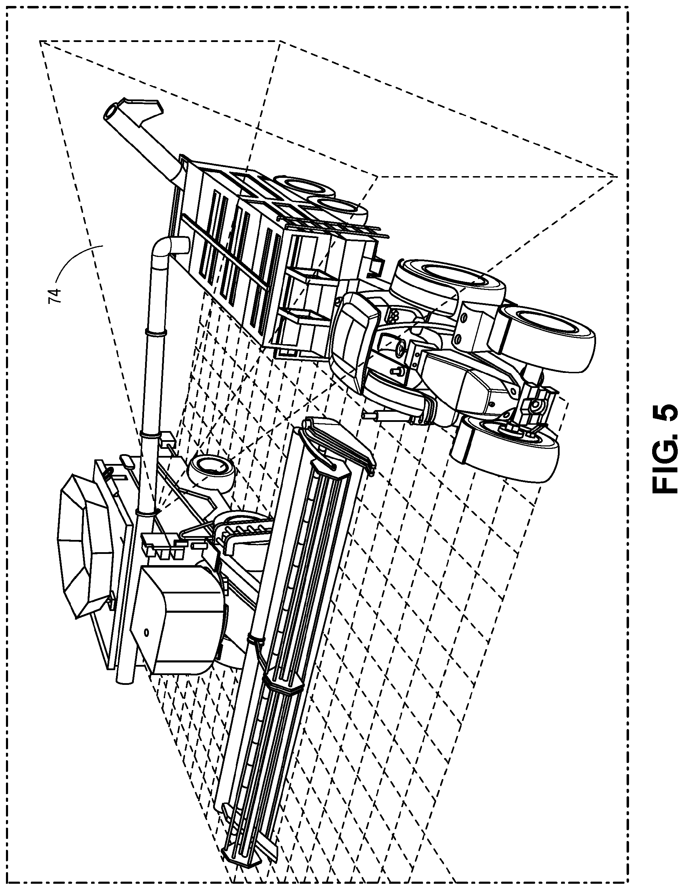

The field of view 74 of the camera 28 relative to the harvester 10 and the receiving vehicle is illustrated in Fig. 5. The camera 28 requires an external light source such as natural ambient light or an artificial light source such as a light mounted on the harvester 10 or the receiving vehicle. The camera 28 or the harvester 10 may include a dedicated light source that is configured and used specifically for capturing images with the camera 28.

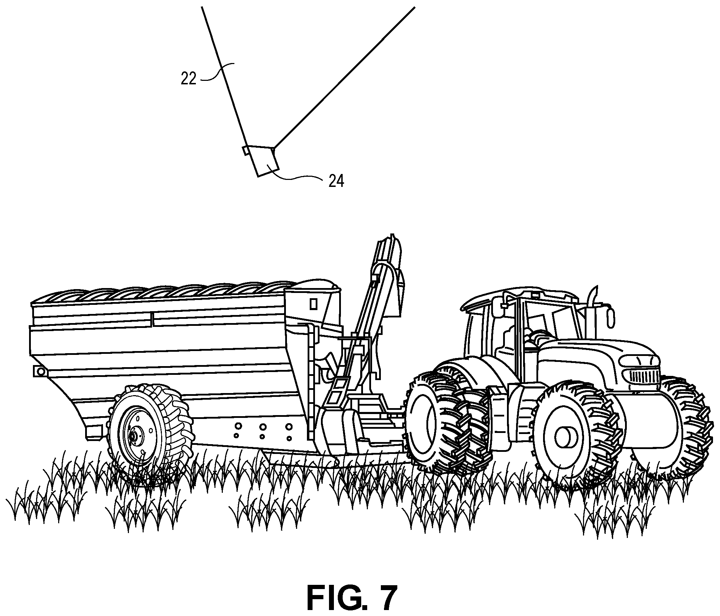

An exemplary image taken from the camera 28 is illustrated in Fig. 7 and includes the tractor 34 and grain cart 36. The unload conveyor 22 and spout 24 are also visible in the image. Image data generated by the camera 28 is used by the one or more computing devices to determine whether a receiving vehicle is present in the image. In the image illustrated in Fig. 7 the grain cart 36 is visible so the one or more computing devices confirms the presence of the grain cart in the field of view and determines its location relative to the harvester 10, as explained below.

The one or more computing devices are configured to use image data generated by the camera to identify the receiving vehicle within the field of view of the camera and determine the location of the receiving vehicle relative to the harvester. Computer software 76 is illustrated in Fig. 6 including two software modules, a first module 78 for identifying a receiving vehicle depicted in the image data and a second module 80 for determining the receiving vehicle's location relative to the harvester.

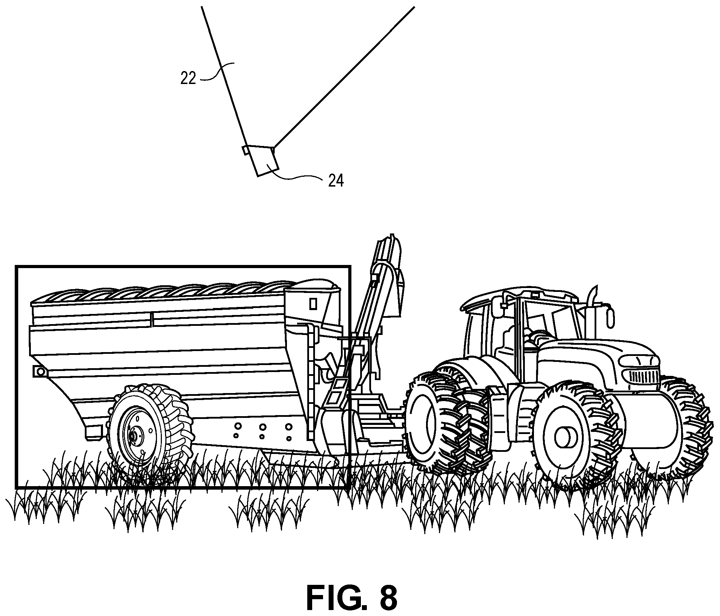

The first software module 78 includes instructions for identifying a receiving vehicle depicted in image data generated by the camera 28. In particular, the software module 78 includes one or more machine learning algorithms configured to determine whether an image includes a depiction of a receiving vehicle and, if so, the type of receiving vehicle depicted in the image. If the image captured by the camera 28 includes a receiving vehicle, the first module 78 generates data corresponding to attributes of the receiving vehicle. Such attributes include, without limitation, identification information, location information, and size information. The identification information indicates the particular receiving vehicle from among a plurality of possible different receiving vehicles. The location information indicates a relative position (e.g., one or more pairs of coordinates) of the receiving vehicle within the image. The size information indicates a relative size (e.g., one or more dimension values) of the receiving vehicle within the image. The location and size information may both be contained in a single pair of coordinates that indicate opposing corners of a rectangular box bounding the receiving vehicle in the image, as depicted graphically in Fig. 8.

As indicated above, the first software module 78 includes one or more machine learning algorithms for determining whether image data includes a depiction of a receiving vehicle and, if so, attributes about the receiving vehicle. As used herein, a machine learning algorithm is an algorithm that enables a computer to learn from experience. The concept of experience in this regard is typically represented as a dataset of historic events, and learning involves identifying and extracting useful patterns from such a dataset. A machine learning algorithm takes a dataset as input and returns a model that encodes the patterns the algorithm extracted (or "learned") from the data.

The one or more computing devices use the machine learning algorithm to learn to identify receiving vehicles depicted in images captured by the camera 28 by analyzing many different images of different types of receiving vehicles, including different models of grain carts. This process may involve analyzing thousands, tens of thousands or hundreds of thousands of images and developing a model that takes as an input an image of a receiving vehicle captured by the camera 28 and returns values indicating a particular type of receiving vehicle. As explained below, dimensions such as length and height for each type of receiving vehicle are known and matched to the particular receiving vehicle identified by the model. The one or more computing devices use the actual dimensions of the receiving vehicle, the size of the receiving vehicle in the image and the position of the receiving vehicle in the image to determine a location of the receiving vehicle relative to the harvester 10.

The one or more machine learning algorithms preferably include a deep learning algorithm and, in particular, a deep learning algorithm involving a convolutional neural network. Convolutional neural networks are a class of deep learning neural networks well-suited for analyzing image data. A convolutional neural network includes an input layer, an output layer and a number of hidden layers. The hidden layers of a convolutional neural network typically consist of a series of convolutional layers that convolve with a multiplication or other dot product. The activation function is commonly a rectifier linear unit layer, and is subsequently followed by additional convolutions such as pooling layers, fully connected layers and normalization layers, referred to as hidden layers because their inputs and outputs are masked by the activation function and final convolution.

Once the type of receiving vehicle is determined by the first software module 78, the second software module 80 determines the receiving vehicle's location relative to the harvester 10. The location of the receiving vehicle relative to the harvester 10 includes the distance of the receiving vehicle from the harvester and the fore-aft position of the receiving vehicle relative to the harvester 10. The module 80 does these values by comparing one or more dimensions of the receiving vehicle with a size of the vehicle in the image. The dimensions of the receiving vehicle are determined using a look-up table that correlates the particular receiving vehicle with dimensions. An example look-up table is presented below as Table 1. Table 1 includes various receiving vehicle model numbers along with each model's length and height. If the first software module 78 determines that the receiving vehicle corresponds to model 2 in the table, the second software module 80 uses the table to determine that the length of the receiving vehicle is 4.88 meters and the height is 3.41 meters. Table 1 is exemplary in nature and, in the interest of brevity, is relatively short. It will be appreciated that in practice the table may be much longer and may include hundreds of rows.

Table 1

| Model # | Length | Height |
|---------|--------|--------|
| 1 | 6.55 | 3.84 |
| 2 | 4.88 | 3.41 |
| 3 | 7.20 | 3.91 |
| 4 | 4.19 | 3.35 |

The module 80 may use the length, height or both of the receiving vehicle in the image (such as, for example, a size in millimeters, a number of pixels or a percentage of the overall width and/or height of the image) to determine that the receiving vehicle is a particular distance from the harvester 10 using the following equation:

$$Distance\ from\ Sensor = \frac{Real\ Dimension \times Focal\ Length}{Dimension\ in\ Sensor}$$

In this equation the Real Dimension is the length or height of the receiving vehicle from the look-up table depicted in Table 1. Alternatively, the module 80 may use a look-up table that correlates an actual vehicle dimension and a corresponding vehicle dimension in the image with a distance from the harvester.

The second software module 80 determines the fore-aft position of the receiving vehicle relative to the agricultural harvester 10 using the position of the receiving vehicle in the image. The second software module 80 may identify features of the receiving vehicle and generate a bounding box as illustrated in Fig. 8. The one or more computing devices use the position of the receiving vehicle in the image to determine the location of the receiving vehicle relative to the agricultural harvester. Positions of the receiving vehicle toward the left of the image indicate that the receiving vehicle is behind or trailing the position of the unload conveyor 22. Positions of the receiving vehicle toward the right of the image indicate that the receiving vehicle is ahead of or leading the position of the unload conveyor 22.

The one or more computing devices use the data generated by the camera 28 to generate graphic data defining a graphical representation illustrating the relative positions of the unload conveyor 22 and the grain bin 38. This graphical representation assists an operator in manually guiding either the tractor 34 or the harvester 10 to align the unload conveyor 22 with the grain bin 38.

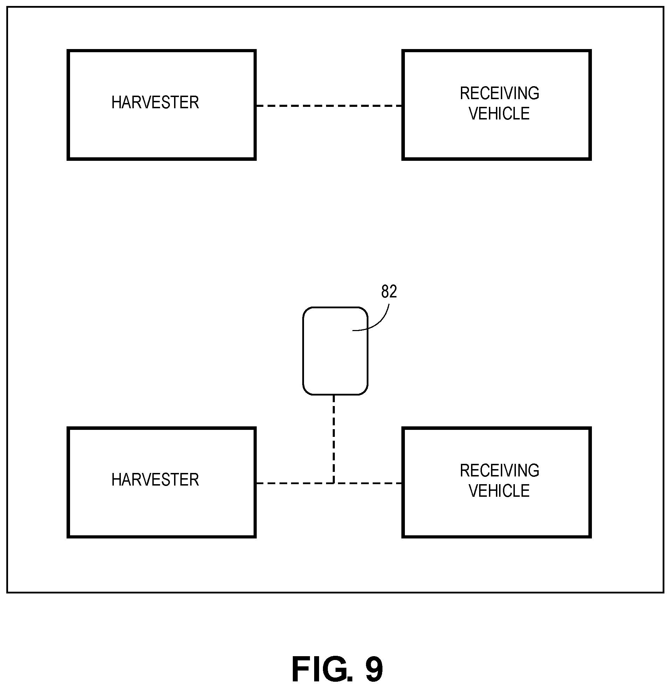

The graphical representation may be presented on the user interface 48 of the harvester 10, on a user interface of the tractor 34, on a user interface of a portable electronic device such as a table computer or a smartphone, or on any combination thereof. As depicted in a first diagram of Fig. 9, in some embodiments the harvester 10 is in wireless communication with the receiving vehicle wherein a computing device on the harvester 10 generates and communicates the graphical representation to the receiving vehicle as a wireless communication. The tractor includes an electronic system similar to that of the harvester 10 and illustrated in Fig. 2, as explained above, including a wireless gateway, a controller and a user interface. The harvester 10 communicates the graphic data via the wireless gateway of the harvester 10 and the tractor receives the graphic data via the wireless gateway of the tractor 34, wherein the user interface on the tractor 34 generates the graphical representation from the graphic data and presents the graphical representation to the operator on the user interface.

As depicted in a second diagram of Fig. 9, in some embodiments the harvester 10 may be in wireless communication with the receiving vehicle and with a portable electronic device 82 wherein a computing device on the harvester 10 generates and communicates the graphical representation to the receiving vehicle, to the portable electronic device, or both as a wireless communication. The portable electronic device 82 may be placed in the operator cabin 26 of the harvester 10, in the operator cabin of the tractor 34, or another location that is not in the harvester 10 or in the tractor 34. The portable electronic device 82 receives the graphic data from the harvester 10 through a wireless transceiver on the portable electronic device.

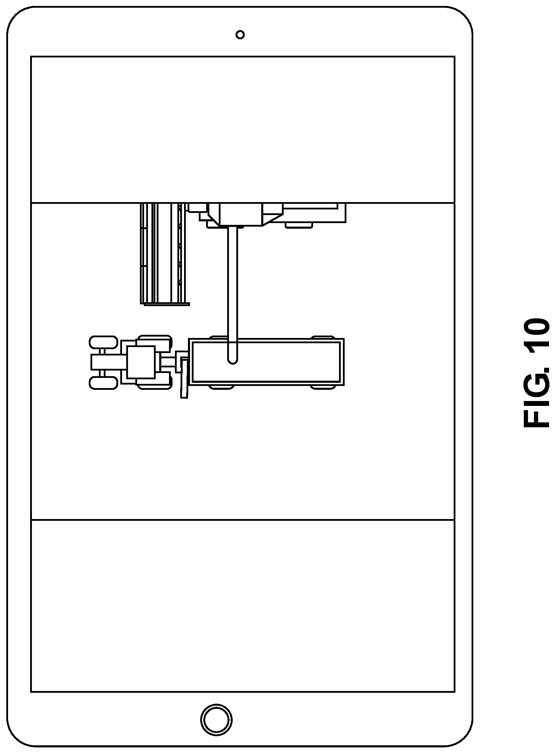

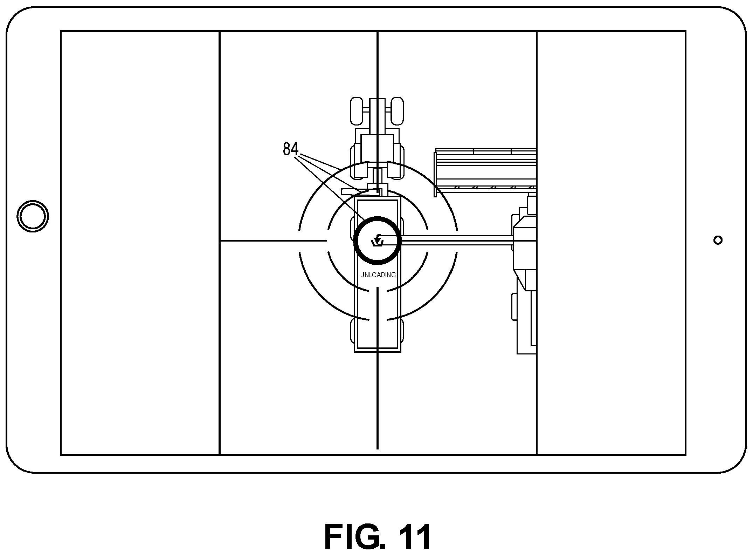

The graphical representation is presented as part of a graphical user interface on a portable electronic device in Figures 10 and 11 for illustration purposes, with the understanding that the graphical representation may be presented on a display that is part of a display console in the receiving vehicle or in the harvester 10. The graphical representation of the grain cart 36, the harvester 10 and their relative positions enables the operator of the tractor 34 to guide the tractor to a location relative to the harvester 10 where the grain bin 38 of the grain cart 36 is properly aligned with the unload auger 22. The grain cart 36 and the harvester 10 are depicted in plan view (that is, from a perspective directly above the machines and looking down) so that the operator can clearly see from the graphic representation the relative positions of the grain cart and the harvester 10.

Figure 11 depicts an alternative implementation of the graphical representation similar to that of Fig. 10 wherein the depiction of the grain cart and the harvester 10 includes concentric target lines 84 around the graphical depiction of the spout of the unload conveyor 22 to assist the operator in aligning the unload conveyor 22 with the grain bin.

During a harvest operation, the one or more computing devices continuously or periodically receive data from the camera 28, and use the data to detect the presence of the receiving vehicle and to determine the location of the receiving vehicle relative to the harvester 10. In an exemplary scenario, the one or more computing devices receive and process data from the camera 28 and apply a deep learning algorithm to the image data to identify the receiving vehicle, as explained above. The one or more computing devices determine one or more dimensions of the receiving vehicle using a look-up table, as explained above, and determine the location of the receiving vehicle relative to the harvester 10 using the size and position of the receiving vehicle in the image as well as the one or more dimensions of the receiving vehicle.

The one or more computing devices use the location of the receiving vehicle relative to the harvester 10 to generate a graphic representation of at least portions of the harvester 10 and the receiving vehicle that illustrate, in an intuitive way, the relative positions of the unload conveyor 22 and the grain bin of the receiving vehicle. The graphic representation is presented on a graphical user interface in the operator cabin of the tractor (or the harvester 10), typically located toward the front or side of the operator when he or she is facing forward, thereby allowing the operator to see the position of the grain bin relative to the unload auger and steer the tractor so that the grain bin is located beneath the spout of the unload conveyor. This relieves the operator(s) of the need to try to look backward to see the position of the unload conveyor while also watching the field ahead of the machine. The graphical representation has the further advantage of enabling the operator(s) to see the relative positions of the machines even in situations with limited visibility outside the operator cabin.

A second embodiment of the invention is identical to the first embodiment described above, except that the location of the receiving vehicle relative to the harvester 10 is used to automatically guide the harvester 10, the tractor, or both to align the grain bin of the receiving vehicle with the unload conveyor 22 during an unload operation.

An agricultural harvester according to the second embodiment of the invention comprises a crop processor for reducing crop material to processed crop, an unload conveyor for transferring a stream of processed crop out of the agricultural harvester, a camera for capturing images of an area proximate the agricultural harvester and generating image data from the captured images. The harvester further includes one or more computing devices for receiving the image data from the camera, identifying, from the image data, a pre-determined visual marker corresponding to a receiving vehicle, determining, from the visual marker, a location of the receiving vehicle relative to the agricultural harvester, and generating automated navigation data based on the location of the receiving vehicle relative to the agricultural harvester, the automated navigation data to automatically control operation of at least one of the agricultural harvester and the receiving vehicle to align the unload conveyor with a grain bin of the receiving vehicle.

Automated guidance of a machine involves generating or acquiring a target travel path known as a wayline, determining a geographic location of the machine, comparing the machine's geographic location to the location of the wayline and automatically steering the machine to travel along the wayline. The wayline may be generated by an operator of the machine by, for example, designating a starting point and an ending point of the wayline or designing a start point and a direction of travel. The wayline may also be stored and retrieved from a previous operation, received from another agricultural machine or imported from an external computer device, such as an external computer running farm management software that generates the wayline. The wayline is represented by two or more geographic locations or points known as waypoints. The automated guidance system is part of the machine and is included in the electronic system described above. Automated guidance software stored in the storage component, for example, enables the controller to determine or acquire the wayline, determine the machine's location using the position determining component, compare the machine's location with the location of the wayline, and automatically steer the machine using data from the one or more sensors to determine a steering angle of the wheels and using the actuators to change the steering angle of the wheels, if necessary, to steer the machine to or along the wayline.

During operation the machine's geographic location is continuously determined using a GNSS receiver, and the location of a navigation point of the machine (for example, a point located between the rear wheels of a tractor or between the front wheels of a harvester) is continuously compared with the location of the wayline. Steering of the machine is automatically controlled so that the navigation point of the machine follows the wayline.

The automated guidance system of the tractor 34 automatically aligns the grain bin 38 of the grain cart 36 with the unload conveyor 22 by generating a wayline that corresponds to a path that will place the grain bin 38 beneath the spout 24 of the unload conveyor 22. By way of example, the one or more computing devices may determine from the data generated by the modules 28 and the camera 32 that the lateral distance of the grain cart 36 from the harvester 10 is seven meters. If the lateral distance required to align the grain bin 38 with the spout 24 is six meters, the automated guidance system of the tractor 34 generates a wayline that is one meter closer to the harvester 10 and steers the tractor 34 to follow the wayline. Similarly, if the one or more computing devices determine that the lateral distance is four meters, the automated guidance system of the tractor 34 generates a wayline that is two meters further away from the harvester 10 and steers the tractor 34 to follow the wayline.

The automated guidance system further controls the propulsion of the tractor 34 to shift the tractor's position forward or rearward relative to the harvester 10 to maintain a proper longitudinal position of the tractor 34 relative to the harvester 10 such that the grain cart 36 presents a proper front to back position relative to the unload conveyor 22. If the one or more computing devices determines that the grain cart 36 has a negative longitudinal offset relative to the harvester 10 (in other words, the position of the grain cart 36 is behind a desire position relative to the harvester 10) the automated guidance system causes the tractor 34 to speed up until it is at the desire position, then causes it to match the speed of the harvester 10. Similarly, if the one or more computing devices determines that the grain cart 36 has a positive longitudinal offset relative to the harvester 10 (in other words, the position of the receiving vehicle is ahead of a desire position relative to the harvester 10) the automated guidance system causes the tractor 34 to slow down until it is at the desire position, then causes it to match the speed of the harvester 10.

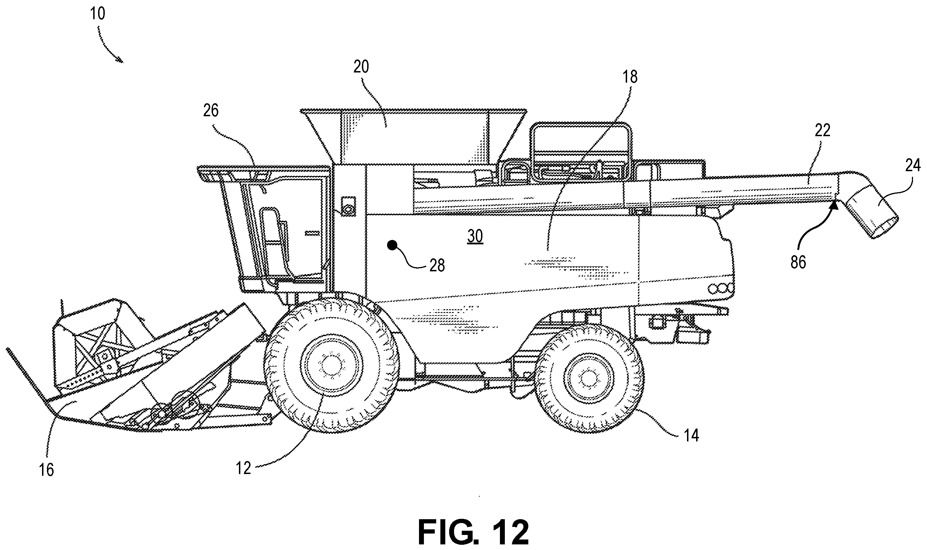

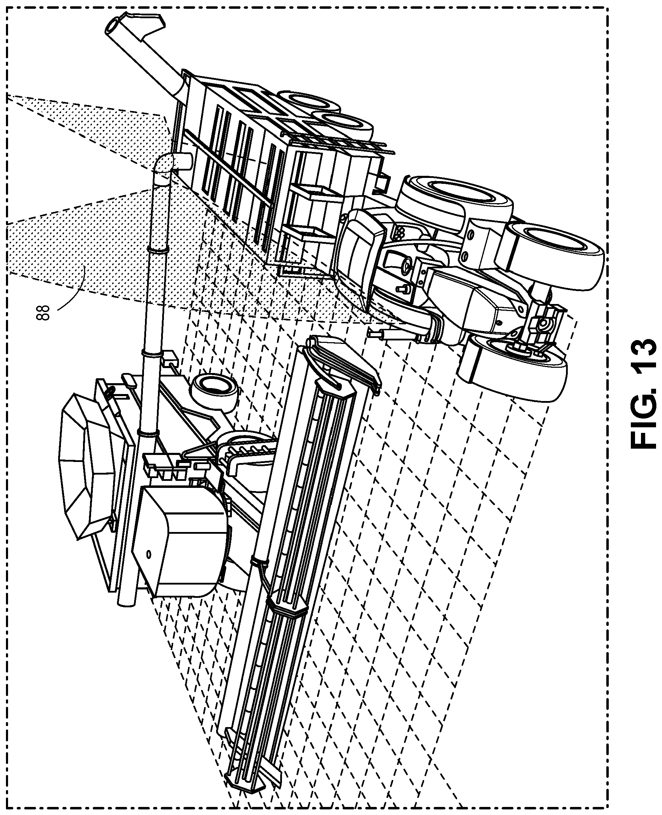

Another embodiment of the invention is identical to the first embodiment, described above, except that the harvester 10 includes an electromagnetic detecting and ranging module 86 as illustrated in Figs. 12 and 13. The electromagnetic detecting and ranging module 86 uses reflected electromagnet waves to generate a digital representation of objects within a field of view of the module 86. More particularly, the module 86 includes an emitter for emitting electromagnetic waves and a sensor for detecting reflected waves. Data generated by the sensor includes such information as an angle and a distance for each data point that indicate a point in space where the wave encountered and reflected off of an object. Thus, the digital representation generated by the module 86 includes distances to and relative locations of objects and surfaces within the field of view. Technologies that may be used in the module 86 include LiDAR and RADAR.

Light detecting and ranging (LiDAR) is a method for measuring distances (ranging) by illuminating the target with laser light and measuring the reflection with a sensor. Differences in laser return times and wavelengths can then be used to make digital three-dimensional or two-dimensional representations of the area scanned. LiDAR may use ultraviolet, visible, or near infrared light to image objects and can target a wide range of materials, including metallic and non-metallic objects.

Radio detecting and ranging (RADAR) is a detection system that uses radio waves to determine the range, angle, and/or velocity of objects. A RADAR system includes a transmitter producing electromagnetic waves in the radio or microwave domains, a transmitting antenna, a receiving antenna (often the same antenna is used for transmitting and receiving) and a receiver and processor to determine properties of the object(s) within the scan zone of the system. Radio waves (pulsed or continuous) from the transmitter reflect off the object and return to the receiver, giving information about the object's location, direction of travel and speed.

The electromagnetic detecting and ranging module 86 collects data that defines a digital representation of the area within the field of view of the module 86 and communicates that data to the controller 44. The data collected by the module 86 includes location information for each of a plurality of points making up a point cloud. The location information is relative to the module 86 generating the data and may include a set of two-dimensional Cartesian coordinates, such as X and Y coordinates of the point relative to the module 86; a set of three-dimensional Cartesian coordinates such as X, Y and Z coordinates; a set of polar coordinates such as a radial coordinate (r) indicating a distance from the module 86 and an angular coordinate ($\theta$) indicating an angle from a reference direction; a set of spherical coordinates such as a radial coordinate (r) indicating a distance of the point from the module 86, a polar angle coordinate ($\theta$) measured from a fixed zenith direction, and an azimuthal angle coordinate ($\varphi$) of its orthogonal projection on a reference plane that passes through the origin and is orthogonal to the zenith, measured from a fixed reference direction on that plane; or a set of cylindrical coordinates such as a distance (r) to the point from a reference axis (typically corresponding to a location of the module 86), a direction ($\varphi$) from the reference axis, and a distance (Z) from a reference plane that is perpendicular to the reference axis.

The electromagnetic detecting and ranging module 86 is located at or near an end of the unload conveyor 22 corresponding to the spout 24 and distal the body 18 of the harvester 10. The module 80 includes a two-dimensional light detecting and ranging (LiDAR) scanner positioned to scan an area 88 extending downwardly from the end of the unload conveyor 22 that is perpendicular or approximately perpendicular to a longitudinal axis of the unload conveyor 22. This scan area 88 includes an area inside the grain bin 38 of the receiving vehicle when the grain bin 38 is positioned below the spout 24 of the unload conveyor 22.

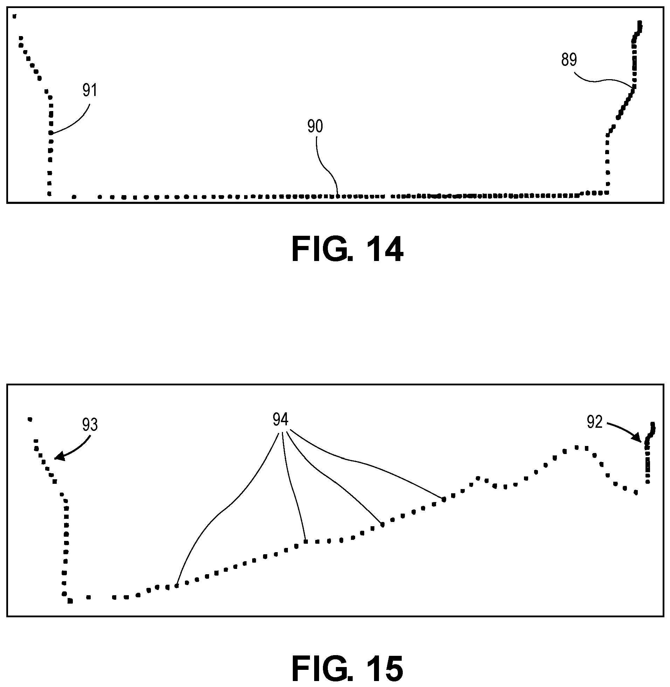

The module 86 includes a two-dimensional light detecting and ranging (LiDAR) scanner that generates a plurality of data points within the plane corresponding to the scan area, each data point including a distance value corresponding to a distance from the module 86. The one or more computing devices process the data from the module 86 to identify patterns. A series of data points generated by the module 86 when the grain bin of the receiving vehicle is empty is illustrated in Fig. 14. A first pattern 89 of the data points corresponds to an interior surface of a front wall of the grain bin, a second pattern 90 corresponds to an interior surface of a floor of the grain bin and a third pattern 91 corresponds to an interior surface of a rear wall of the grain bin. A series of data points generated by the module 86 when the grain bin is partially filled is illustrated in Fig. 15. In Fig. 15 the generally vertical patterns near the front 92 and the near the rear 93 of the data set correspond to the front and rear walls of the grain bin while the data points 94 corresponding to the generally diagonal angled and curved patterns between the front and rear walls correspond to a top surface of a quantity of grain heaped in the grain bin.

The one or more computing devices use this data generated by the module 86 to determine the fill level of the grain cart 36, the distribution of grain (or other processed crop material) within the grain cart 36, or both. To determine the fill level of the grain cart 36 the one or more computing devices identify data points 94 corresponding to grain (verses data points corresponding to walls or the floor of the grain bin), determine a fill height of each of the data points corresponding to grain, and then average the fill height of the data points corresponding to grain to generate an average fill level of the grain bin.

To identify data points corresponding to grain the one or more computing devices may use patterns in the data, receiving vehicle location information generated using data from the camera 28, or both. The one or more computing devices may use patterns in the data by identifying patterns corresponding to certain parts of the grain bin such as a front wall (for example, pattern 89), rear wall (for example, pattern 91) and floor (for example, pattern 90) or a combination of two or more of these features. In the collection of data illustrated in Fig. 14, for example, the walls and floor are identified from the data patterns 89, 90, 91 and it is determined that none of the data points correspond to grain. In the collection of data illustrated in Fig. 15, the front wall and the rear wall are identified from the data patterns 92, 93. When the data patterns detected in Fig. 15 are compared to a data pattern corresponding to an empty grain bin (Fig. 14) it is determined that most of the data points between the front wall and the rear wall do not match the expected location and shape of a data pattern corresponding to the floor and, therefore, correspond to grain. The one or more computing devices then determine a fill height of each of the data points corresponding to grain, wherein the fill height is the distance of the data point from the floor of the grain bin to the data point. The fill height may be determined by comparing the location of the data point to the anticipated location of the floor. In the illustrated data patterns, this may involve comparing the data points 94 to data points 90. Once the fill height is determined for all of the data points an average fill height of all of the data points is determined and used as the overall grain bin fill level, as stated above.

The one or more computing devices may also use receiving vehicle location information from the module 28 to determine or assist in determining the fill level of the grain bin of the receiving vehicle. If the location of the receiving vehicle relative to the harvester 10 is known the vehicle's location relative to the unload conveyor may be used to determine the height of the data points corresponding to grain relative to the floor of the grain bin by comparing the location of the data point to the location of the floor of the grain bin determined using the location of the receiving vehicle.

Additionally or alternatively the one or more computing devices determine a distribution of grain in the grain bin. Using the data pattern illustrated in Fig. 15, for example, the fill height of each data point 94 is determined as explained above and a fill height value and longitudinal (distance from the rear wall or from the front wall) is stored for each data point. That information may then be used by the one or more computing devices to depict a fill level at various locations in the grain bin in a graphical user interface, as discussed below.

While the description above describes a technique of determining the fill level and distribution of crop material in the receiving vehicle by comparing differences between a measured surface of the crop with an anticipated floor of the receiving vehicle, it will be appreciated that other techniques may be used to determine the fill level and the distribution. The one or more computing devices may compare the measured surface of crop material with a top of the receiving vehicle, for example. The one or more computing devices may detect patterns in the data generated by the module 86 by comparing data generated by the module 86 with preexisting data corresponding to the receiving vehicle.

A visual representation of the fill level of the grain bin allows the operator to see whether or not the receiving vehicle is full and to estimate how much time is required to completely fill the receiving the vehicle. A visual representation of the distribution of crop in the grain bin allows the operator to see which portions of the grain bin are full and to adjust the position of the receiving vehicle relative to the unload conveyor 22 of the harvester 10 to fill portions of the grain bin with less grain.

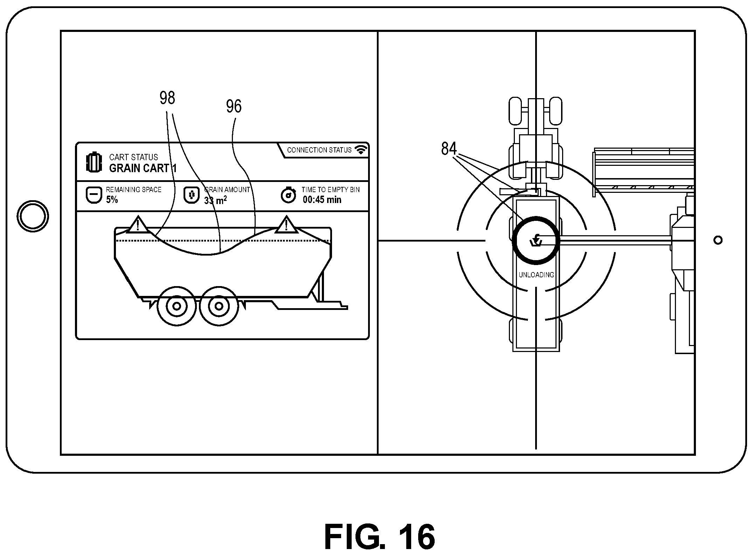

The fill level and distribution of the grain are also presented to the operator via the graphical user interface via an image such as that depicted in Fig. 16. The straight line 96 depicts the fill level of the grain bin 38 if the grain in the bin were evenly distributed. The curved line 98 depicts the distribution of the grain enabling the operator to adjust the position of the grain bin 38 relative to the unload conveyor 22 to fill areas of the grain bin where the level of the grain is lower.

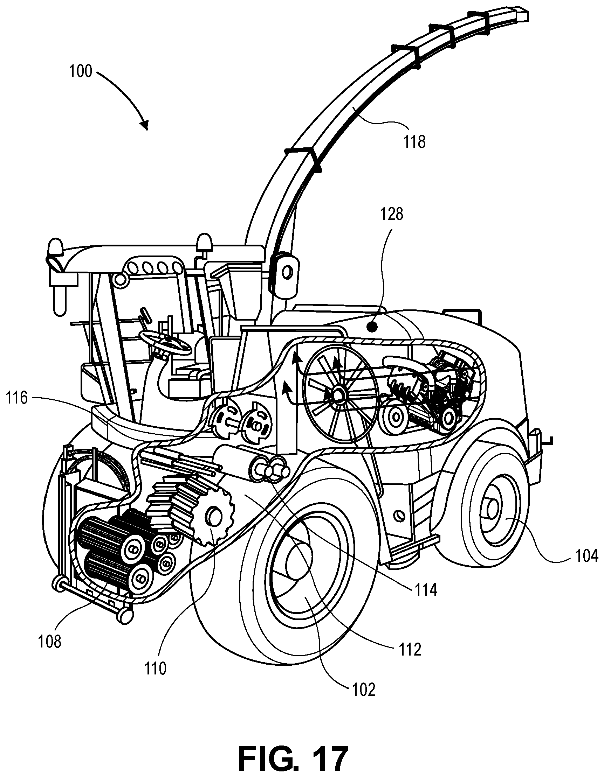

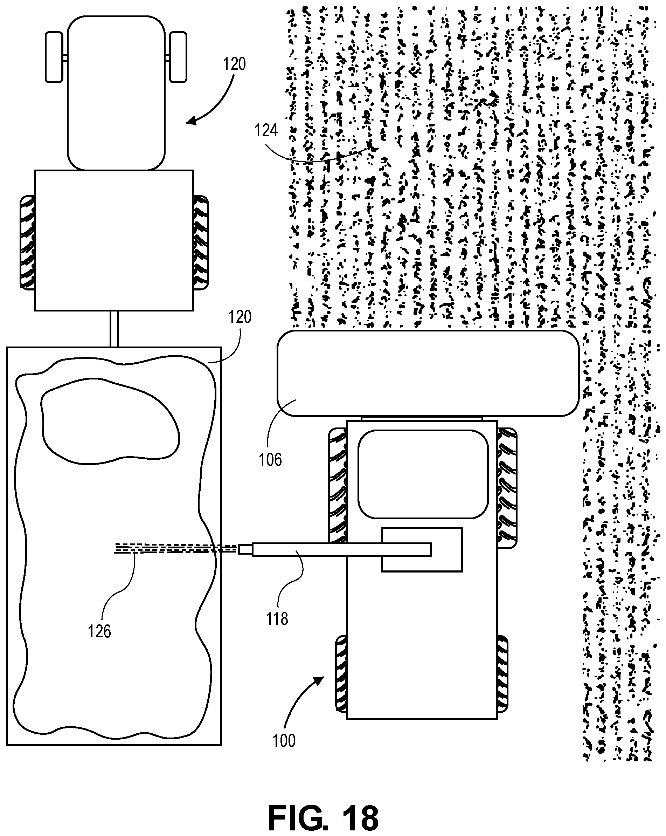

In the embodiments described above the harvester is a combine harvester. The harvester may also be a forage harvester, such as the self-propelled forage harvester 100 illustrated in Figures 17 and 18. The forage harvester 100 is supported by front 102 and rear 104 wheels. The forage harvester 100 connects to a header 106 suitable for harvesting maize, but may also be equipped with a windrow pick-up header or other type of header. The header 106 is provided for severing or picking up the crop off the ground and directing it to a series of feed rollers 108 that compact the raw crop material and advance it to one or more chopping drums 110. The chopped crop material follows a drum floor 112 to roller crackers 114 that crack grain kernels. From there the processed crop material is blown by a discharge blower 116 through a discharge chute 118 into a receiving vehicle, such as a silage wagon 120 pulled by a tractor 122. As used herein, the feed rollers 108, chopping drums 110 and roller crackers 114 constitute a crop processor that takes raw crop material (plants or portions of plants cut or picked up from the field) and reduce the raw crop material to processed crop material (chopped plant matter). Furthermore, the discharge chute 118 is a type of unload conveyor as used herein.

In operation the forage harvester 100 advances through a field cutting the crop 124 standing in the field and processes the crop as explained above. The processed crop is transferred from the forage harvester 100 to the wagon 120 by way of the discharge chute 118. A stream of processed crop 126 is blown through the chute 188 into the wagon 120. The tractor 122 and wagon 120 follow the forage harvester 100 through the field.

The forage harvester 100 includes an onboard electronic system with similar components and architecture to the system 42 described above including a controller, position determining device, user interface, sensors, actuators, storage components, input/output ports, a communications gate and a camera 128. The camera 128 may function in a similar or identical manner to the camera 28 described above, along with one or more computing devices, to detect and track a location of a receiving vehicle (such as the wagon 120) and at least one of the fill level and content distribution of crop material within the receiving vehicle. The data collected by the camera 128 is used to generate a graphical representation of the unload conveyor 116 of the harvester 100 and the receiving vehicle that is presented to an operator of either the harvester 100 or the tractor 122 by way of a graphical user interface as explained above. Alternatively or additionally, the data collected by the camera 128 may be used to generate guidance data used by at least one of the harvester 100 and the receiving vehicle to automatically guide at least one of the vehicles to maintain proper alignment of the unload conveyor 116 with the receiving vehicle.

As used herein, an "unload operation" includes transferring processed crop from a forage harvester to a silage wagon as illustrated in Fig. 14, and "grain cart" and "grain bin" include silage wagon and the bin of a silage wagon.

A schematic diagram of certain components of a portable electronic device 200 is illustrated in Fig. 18 and includes one or more computer processors 202, one or more memory and storage components 204, memory and storage controller circuitry 206, peripheral interface circuitry 208 and other hardware/circuitry 210 associated with user interface(s) (for example, a graphical user interface), input/output, sensors and communications (for example, wireless or wired network communications). The memory and storage component 204 stores computer software executable by the processor(s) 202, such as an operating system and applications, as well as data. The memory and storage controller 206 controls access to and communication with the memory 204 by the processor(s) 202 and the peripheral interface 208. When a software application is installed or run on the portable electronic device 200 the executable computer instructions, as well as the data, associated with the app are stored in the storage and memory components and executed by the processor(s). The processor(s) 202, the peripheral interface 208 and/or the hardware and circuitry 210 associated with the interface, I/O, sensors and communications enable a human-machine interface such as a touchscreen through which a user interacts with the device. The processor(s) 202, the peripheral interface 208 and/or the hardware and circuitry 210 associated with the interface, I/O, sensors and communications also enable communications with an external communications or computer network or with an external machine, such as the harvester 10.

Although the invention has been described with reference to the preferred embodiment illustrated in the attached drawing figures, it is noted that equivalents may be employed and substitutions made herein without departing from the scope of the invention as recited in the claims.

The claims at the end of this patent application are not intended to be construed under 35 U.S.C. § 112(f) unless traditional means-plus-function language is expressly recited, such as "means for" or "step for" language being explicitly recited in the claim(s).

Having thus described the preferred embodiment of the invention, what is claimed as new and desired to be protected by Letters Patent includes the following:

**Claims**

1. A system comprising:
   an agricultural harvester (10) including -

   a crop processor for separating grain from material other than grain,
   an unloading conveyor (22) for transferring grain out of the agricultural harvester (10), and
   a camera (28) for capturing images of an area adjacent to the agricultural harvester (10) and generating image data, one or more computing devices,
   an electronic device including a graphical user interface (48), the electronic device configured to -

   receive a location data from the one or more computing devices,
   use the location data to generate a graphical representation illustrating the relative positions of the unload conveyor (22) and the grain bin (38), and
   present the graphical representation on the graphical user interface (48); wherein

   the one or more computing devices are configured for -

   receiving the image data from the camera (28) during a harvest operation, **characterized in that** the one or more computing devices are further configured for
   applying a machine learning model to identify, using only image data from the camera (28), a receiving vehicle (34, 36) from among a plurality of possible different receiving vehicles,
   determining dimensions associated with the identified receiving vehicle (34, 36) using a look-up table that correlates the particular receiving vehicle with the dimensions, and
   determining, using the dimensions and the image data, a location of the receiving vehicle (34, 36) relative to the agricultural harvester (10).

2. The system as set forth in claim 1, the one or more computing devices being configured to -

determine a location and a size of the receiving vehicle (34, 36) in the image data, and
use the location and the size in determining the location of the receiving vehicle (34, 36) relative to the agricultural harvester (10).

3. The system as set forth in claim 1, the machine learning model including a deep learning model.

4. The system as set forth in claim 1,

the agricultural harvester (10) further comprising an electromagnetic detecting and ranging module (86) for generating fill and distribution data indicating a fill level and a grain distribution of grain in the receiving vehicle (34, 36),
the electronic device further configured to -

receive the fill and distribution data, and
use the location data and the fill and distribution data to generate the graphical representation illustrating the relative positions of the unload conveyor (22) and the grain bin (38) and illustrating the fill level of the grain bin (38).

5. The system as set forth in claim 4, the electromagnetic detecting and ranging module (86) performing a two-dimensional scan.

6. The system as set forth in claim 4, the electromagnetic detecting and ranging module (86) performing a three-dimensional scan.

7. The system as set forth in claim 4, the electromagnetic detecting and ranging module (86) being a light detecting and ranging (LiDAR) module.

8. The system as set forth in claim 4, the electromagnetic detecting and ranging module (86) being a radio detecting and ranging (RADAR) module.

9. The system as set forth in claim 4, the electromagnetic detecting and ranging module (86) being placed at an end of the unloading conveyor (22) distal a body of the agricultural harvester (10).

10. The system as set forth in claim 1,

the agricultural harvester (10) further including a first wireless transceiver for sending and receiving wireless communications,
the grain transfer system further comprising a receiving vehicle (34, 36), the receiving vehicle (34, 36) including -

a grain bin (38) for receiving transferred grain,
a second wireless transceiver for sending and receiving wireless communications, and
a graphical user interface (48),

wherein the electronic device is a user interface console of the receiving vehicle (34, 36), the agricultural harvester (10) communicates the location data to the receiving vehicle (34, 36) via the first wireless transceiver, and the receiving vehicle (34, 36) receives the location data via the second wireless transceiver.

**Patentansprüche**

1. System mit:

einer landwirtschaftlichen Erntemaschine (10), die

einen Erntegutprozessor zum Trennen von Getreide von einem anderen Material als Getreide,
einen Entladeförderer (22) zum Überführen des Getreides aus der landwirtschaftlichen Erntemaschine (10) heraus und
eine Kamera (28) zum Aufnehmen von Bildern eines an die landwirtschaftliche Erntemaschine (10) angrenzenden Bereichs und zum Generieren von Bilddaten,
eine oder mehrere Rechenvorrichtungen,
eine elektronische Vorrichtung mit einer graphischen Nutzerschnittstelle (48) umfasst,

wobei die elektronische Vorrichtung ausgebildet ist, um

ein Ortsdatum von der einen oder den mehreren Rechenvorrichtungen zu empfangen,
das Ortsdatum zu nutzen, um eine graphische Repräsentation zu generieren, die die relativen Positionen des Entladeförderers (22) und des Getreidebehälters (38) illustriert, und
die graphische Repräsentation auf der graphischen Nutzerschnittstelle (48) zu präsentieren; wobei die eine oder die mehreren Rechenvorrichtungen ausgebildet sind zum Empfangen der Bilddaten von der Kamera (28) während eines Erntebetriebs,
**dadurch gekennzeichnet, dass**
die Rechenvorrichtung weiterhin ausgebildet ist zum
Anwenden eines Maschinenlernmodells, unter ausschließlichem Verwenden von Bilddaten von der Kamera (28), um ein empfangendes Fahrzeug (34, 36) unter einer Mehrzahl von möglichen verschiedenen empfangenden Fahrzeugen zu identifizieren,
Bestimmen von dem identifizierten empfangenden Fahrzeug (34, 36) zugeordneten Dimensionen unter Verwenden eine Nachschlagetabelle, die das jeweilige empfangende Fahrzeug mit den Dimensionen in Bezug setzt, und
Bestimmen eines Orts des empfangenden Fahrzeugs (34, 36) relativ zu der landwirtschaftlichen Erntemaschine (10) unter Verwenden der Dimensionen und der Bilddaten.

2. System nach Anspruch 1, wobei die eine oder die mehreren Rechenvorrichtungen ausgebildet sind, um

einen Ort und eine Größe des empfangenden Fahrzeugs (34, 36) in den Bilddaten zu bestimmen und
den Ort und die Größe beim Bestimmen des Orts des empfangenden Fahrzeugs (34, 36) relativ zu der landwirtschaftlichen Erntemaschine (10) zu verwenden.

3. System nach Anspruch 1, wobei das Maschinenlernmodell ein tiefes Lernmodell (deep learning model) umfasst.

4. System nach Anspruch 1,

wobei die landwirtschaftliche Erntemaschine (10) weiterhin ein elektromagnetisch detektierendes und Entfernungen erfassendes Modul (86) zum Generieren von Füll- und Verteilungsdaten aufweist, die eine Füllhöhe und eine Getreideverteilung von Getreide in dem empfangenden Fahrzeug (34, 36) angeben,
wobei die elektronische Vorrichtung weiterhin ausgebildet ist, um die Füll- und Verteilungsdaten zu empfangen und
die Ortsdaten und die Füll- und Verteilungsdaten zu nutzen, um die graphische Repräsentation zu generieren, die die relativen Positionen des Entladeförderers (22) und des Getreidebehälters (38) illustriert und die Füllhöhe des Getreidebehälters (38) illustriert.

5. System nach Anspruch 4, wobei das elektromagnetisch detektierende und Entfernungen erfassende Modul (86) einen zweidimensionalen Scan ausführt.

6. System nach Anspruch 4, wobei das elektromagnetisch detektierende und Entfernungen erfassende Modul (86) einen dreidimensionalen Scan ausführt.

7. System nach Anspruch 4, wobei das elektromagnetisch detektierende und Entfernungen erfassende Modul (86) ein Licht detektierendes und Entfernungen erfassendes (LiDAR, light detecting and ranging) Modul ist.

8. System nach Anspruch 4, wobei das elektromagnetisch detektierende und Entfernungen erfassende Modul (86) ein Radiowellen detektierendes und Entfernungen erfassendes (RADAR, radio detecting and ranging) Modul ist.

9. System nach Anspruch 4, wobei das elektromagnetisch detektierende und Entfernungen erfassende Modul (86) an einem fern von einer Karosserie der landwirtschaftlichen Erntemaschine (10) liegenden Ende des Entladeförderers (22) platziert ist.

**10.** System nach Anspruch 1,

wobei die landwirtschaftliche Erntemaschine (10) weiterhin einen ersten drahtlosen Sendeempfänger zum Senden und Empfangen von drahtlosen Nachrichten umfasst,
wobei das Getreideüberführungssystem weiterhin ein empfangendes Fahrzeug (34, 36) aufweist, wobei das empfangende Fahrzeug (34, 36)
einen Getreidebehälter (38) zum Empfangen von überführtem Getreide,
einen zweiten drahtlosen Sendeempfänger zum Senden und Empfangen von drahtlosen Nachrichten und
eine graphische Nutzerschnittstelle (48)

umfasst,
wobei die elektronische Vorrichtung eine Nutzerschnittstellenkonsole des empfangenden Fahrzeugs (34, 36) ist,
wobei die landwirtschaftliche Erntemaschine (10) das Ortsdatum über den ersten drahtlosen Sendeempfänger an das empfangende Fahrzeug (34, 36) kommuniziert und wobei das empfangende Fahrzeug (34, 36) das Ortsdatum über den zweiten drahtlosen Sendeempfänger empfängt.

## Revendications

**1.** Dispositif comprenant :
une moissonneuse agricole (10) comportant :

une unité de traitement de récolte destinée à séparer le grain des matières autres que du grain,
un convoyeur de déchargement (22) destiné à transférer le grain hors de la moissonneuse agricole (10), et
une caméra (28) destinée à capturer des images d'une zone adjacente à la moissonneuse agricole (10) et à produire des données d'image,
un ou plusieurs dispositifs de calcul,
un dispositif électronique comportant une interface graphique d'utilisateur (48), le dispositif électronique étant configuré de manière à :

recevoir des données de position à partir des un ou plusieurs dispositifs de calcul,
utiliser les données de position afin de produire une représentation graphique illustrant les positions relatives du convoyeur de déchargement (22) et du compartiment à grain (38), et
présenter la représentation graphique sur l'interface graphique d'utilisateur (48) ; dans lequel les un ou plusieurs dispositifs de calcul sont configurés de manière à :

recevoir des données d'image de la caméra (28) au cours d'une opération de moissonnage,
**caractérisé en ce que**
les un ou plusieurs dispositifs de calcul sont, en outre, configurés de manière à :

appliquer un modèle d'apprentissage automatique afin d'identifier, en utilisant seulement des données d'image de la caméra (28), un véhicule de réception (34, 36) parmi une pluralité de différents véhicules de réception possibles,
déterminer des dimensions associées au véhicule de réception identifié (34, 36) en utilisant une table de valeurs qui donne la corrélation entre le véhicule de réception particulier et les dimensions, et
déterminer, en utilisant les dimensions et les données d'image, une position du véhicule de réception (34, 36) par rapport à la moissonneuse agricole (10).

**2.** Dispositif selon la revendication 1, les un ou plusieurs dispositifs de calcul étant configurés de manière à :

déterminer une position et une taille du véhicule de réception (34, 36) dans les données d'image, et
utiliser la position et la taille lors de la détermination de la position du véhicule de réception (34, 36) par rapport à la moissonneuse agricole (10).

**3.** Dispositif selon la revendication 1, le modèle d'apprentissage automatique comprenant un modèle d'apprentissage profond.

**4.** Dispositif selon la revendication 1,

la moissonneuse agricole (10) comprenant, en outre, un module de détection et de télémétrie électromagnétique (86) destiné à produire des données de remplissage et de distribution indiquant un niveau de remplissage et une distribution de grain des grains dans le véhicule de réception (34, 36),
le dispositif électronique étant, en outre, configuré de manière à :

recevoir les données de remplissage et de distribution, et
utiliser les données de position et les données de remplissage et de distribution afin de produire la représentation graphique illustrant les positions relatives du convoyeur de déchargement (22) et du compartiment à grain (38) et illustrant le niveau de remplissage du compartiment à grain (38).

**5.** Dispositif selon la revendication 4, le module de détection et de télémétrie électromagnétique (86) exécutant un balayage bidimensionnel.

**6.** Dispositif selon la revendication 4, le module de détection et de télémétrie électromagnétique (86) exécutant un balayage tridimensionnel.

**7.** Dispositif selon la revendication 4, le module de détection et de télémétrie électromagnétique (86) étant un module de détection et de télémétrie par ondes lumineuses (LiDAR).

**8.** Dispositif selon la revendication 4, le module de détection et de télémétrie électromagnétique (86) étant un module de détection et de télémétrie par ondes radio (RADAR).

**9.** Dispositif selon la revendication 4, le module de détection et de télémétrie électromagnétique (86) étant placé au niveau d'une extrémité du convoyeur de déchargement (22) de manière distale par rapport à la carrosserie de la moissonneuse agricole (10).

**10.** Dispositif selon la revendication 1,

la moissonneuse agricole (10) comportant, en outre, un premier transmetteur sans fil destiné à envoyer et recevoir des communications sans fil,
le dispositif de transfert de grain comprenant, en outre, un véhicule de réception (34, 36), le véhicule de réception (34, 36) comportant :

un compartiment à grain (38) destiné à recevoir le grain transféré,
un second transmetteur sans fil destiné à envoyer et recevoir des communications sans fil, et
une interface graphique d'utilisateur (48),
dans lequel le dispositif électronique est une console d'interface d'utilisateur du véhicule de réception (34, 36), la moissonneuse agricole (10) communique les données de position au véhicule de réception (34, 36) par l'intermédiaire du premier transmetteur sans fil et le véhicule de réception (34, 36) reçoit les données de position par l'intermédiaire du second transmetteur sans fil.

**FIG. 1**

FIG. 2

# FIG. 3

**FIG. 4**

**FIG. 5**

EP 4 262 339 B1

**FIG. 6**

**FIG. 7**

EP 4 262 339 B1

22

24

**FIG. 8**

HARVESTER

RECEIVING VEHICLE

82

HARVESTER

RECEIVING VEHICLE

**FIG. 9**

**FIG. 10**

FIG. 11

FIG. 12

FIG. 13

**FIG. 14**

**FIG. 15**

**FIG. 16**

**FIG. 17**

**FIG. 18**

# FIG. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9392746 B2